# EUROPÄISCHE PATENTSCHRIFT

(11) **EP 2 199 333 B1**
(45) Veröffentlichungstag und Bekanntmachung des Hinweises auf die Patenterteilung: **24.10.2012**
(21) Anmeldenummer: 09014254.8
(22) Anmeldetag: 14.11.2009
(51) Int. Cl.: C08L 3/02, D04H 1/64, D06M 15/11, D06M 15/233, C08L 31/04, C08L 35/06, D04H 1/587

(54) **Binderverfestigtes, textiles Flächengebilde, Verfahren zu dessen Herstellung und dessen Verwendung**
Binder-strengthened textile sheet, method for its production and application
Structures textiles plates fixées par un liant, son procédé de fabrication et son utilisation

(30) Priorität: 26.11.2008 DE 102008059129
(43) Veröffentlichungstag der Anmeldung: 23.06.2010
(73) Patentinhaber: Johns Manville Europe GmbH, 86399 Bobingen (DE)
(72) Erfinder: Rempt, Elvira, 97877 Wertheim (DE); Eckert, Bernhard, 97896 Freudenberg-Boxtal (DE); Grassl, Thomas, 97204 Höchberg (DE); Gröger, Stephan, 97877 Wertheim (DE)
(74) Vertreter: Mai, Dörr, Besier

(56) Entgegenhaltungen:
- EP-A2- 0 354 023
- WO-A2-2009/149029
- GB-A- 1 082 122
- GB-A- 1 181 505
- GB-A- 1 470 098
- US-A- 3 368 987
- US-A- 3 857 803
- US-A- 3 939 108

## Beschreibung

Die Erfindung betrifft Bindersysteme zur Verfestigung von textilen Flächengebilden, damit verfestigte textile Flächengebilde, deren Herstellung, sowie Produkte enthaltend das Bindersystem bzw. eine damit ausgerüstete textile Fläche.

Textile Flächengebilde, insbesondere solche welche als Einlage zur Herstellung von beschichteten Materialien eingesetzt werden müssen vielfältigen Anforderungen genügen. Beispiele für den Einsatz derartiger Einlagen sind unter anderem textile Rücken für Teppichböden, textile Verstärkungen in PVC-Fußböden oder Dachbahnen.

Zum Einsatz in der Herstellung von Dachbahnen müssen die eingesetzten Einlagen bzw. Trägereinlagen eine ausreichende mechanische Stabilität, wie gute Perforationsfestigkeit und gute Zugfestigkeit, aufweisen, die beispielsweise bei der Weiterverarbeitung, wie Bituminierung oder Verlegen, auftreten. Außerdem wird eine hohe Beständigkeit gegen thermische Belastung, beispielsweise beim Bituminieren oder gegen strahlende Wärme, und Widerstandsfähigkeit gegen Flugfeuer verlangt.

Zum Einsatz bei der Herstellung beschichteten Fußböden, beispielsweise PVC-Fußböden, werden zusätzliche Anforderungen an derartige Einlagen gestellt. In diesem Anwendungsgebiet müssen die Einlagen neben den mechanischen/thermischen Anforderungen auch die Bildung von gasförmigen Stoffen vermeiden, da ansonsten eine Blasenbildung bei der Herstellung, beispielsweise durch Bildung von Wasserdampf, zu beobachten ist. Derartige Blasenbildungen sind sehr problematisch und führen zu Ausbeuteverlusten bzw. minderen Qualitäten.

Neben den vorstehend genannten technischen Anforderungen sind auch die Umweltverträglichkeit bzw. neue gesetzliche Vorschriften dafür verantwortlich, dass bestehende, teilweise bereits gut funktionierende Systeme, durch neue konforme Systeme ersetzt werden müssen. Beispielhaft seien hier neue Industrienormen, wie die DIN EN 14041, oder gesetzliche Änderungen, wie REACH, zu nennen. Die bisher eingesetzten Bindersysteme zur Verfestigung von textilen Flächen basieren auf thermoplastischen und/oder duroplastischen Bindersystemen. Beispielhaft seien hier Aminoplaste und Binder auf Basis von Acrylaten genannt.

Es besteht somit ein erheblicher Bedarf Bindersysteme zur Verfestigung von textilen Flächen, die als Einlage eingesetzt werden sollen, bereitzustellen, welche einerseits den technischen Anforderungen und den gesetzlichen Bestimmungen genügen und andererseits unter wirtschaftlichen Aspekten verfügbar sind.

Aufgabe der vorliegenden Erfindung war es somit neuartige Bindersysteme zur Verfestigung von textilen Flächen bereitzustellen, die einerseits den technischen Anforderungen und den gesetzlichen Bestimmungen genügen und andererseits unter wirtschaftlichen Aspekten verfügbar sind. Eine weitere Aufgabe ist es, dass die Bindersysteme mittels der bekannten und etablierten Verfahren verarbeitet werden können, so dass Investitionen gering gehalten werden können.

Gegenstand der vorliegenden Erfindung ist somit ein textiles Flächengebilde gemäß Anspruch 12.

Weiterer Gegenstand der vorliegenden Erfindung ist die Verwendung eines Bindersystem wie in Anspruch 1 und den Unteransprüchen 2 bis 11 definiert zur Verfestigung von textilen Flächengebilden.

Das mittels des Bindersystems verfestigte textile Flächengebilde weist gegenüber nur mit Komponenten a) verfestigten textilen Flächengebilden überraschenderweise eine ausreichende mechanische Festigkeit auf, ist aber wirtschaftlich günstiger zu realisieren. Gleiches gilt für die gute Wärmeformbeständigkeit, die trotz des Austausches von signifikanten Anteilen an Komponente a) durch Komponenten b) und/oder c), ebenfalls erhalten bleibt.

Das Bindersystem ist darüber hinaus wenig hygroskopisch, so dass keine Einschränkungen beim Einsatz der verfestigten textilen Flächengebilde als Trägereinlagen bei der Herstellung von PVC-Fußböden, beispielsweise durch Blasenbildung, zu beobachten sind.

Gegenüber einem textilen Flächengebilde, welches nur die Komponente b) als Binder aufweist, ist das erfindungsgemäß verfestigte textile Flächengebilde hinsichtlich seines hygroskopischen Verhaltens, der Festigkeit, dem Alterungsverhalten und der Flexibilität verbessert oder aber zumindest gleichwertig.

Durch den teilweisen Ersatz mit Stärke und/oder Polyvinylacetat werden erhebliche Kosteneinspareffekte realisiert. Zusätzlich wird ein vollständig formaldehydfreies Bindersystem erhalten, ohne Abstriche bei den Produkteigenschaften hinnehmen zu müssen. Überraschenderweise werden die Produkteigenschaften in einigen Bereichen sogar noch verbessert. Beispielsweise werden mit den erfindungsgemäßen Bindersystemen sehr gute Heißfestigkeiten, insbesondere in Verbindung mit einer guten Knickfestigkeit, erreichbar. Durch den teilweisen Einsatz von Stärke werden bessere Abdichtungseigenschaften erreicht, d.h. die Porosität ist deutlich verringert. Zudem lässt sich - wie bereits gesagt - in diesem Fall überraschenderweise ein erheblich besseres Knickverhalten erreichen.

Die als Komponente a) erfindungsgemäß eingesetzten Polymerisate auf Basis von (i) vinylaromatischen Verbindungen, insbesondere Styrol, α-Methylstyrol und/oder Vinyltoluol, und (ii) ungesättigten Carbonsäureanhydriden, insbesondere Maleinsäureanhydrid, und/oder ungesättigten Carbonsäureimide, insbesondere Maleinimid, und/oder ethylenisch ungesättigten Dicarbonsäure, insbesondere Itakonsäure, sind für sich alleine genommen bekannt. Geeignete Herstellverfahren sind beispielsweise U.S. Patent 3085994, U.S. Patent 3418292 oder U.S. Patent 3178395 beschrieben.

Neben den vorstehend genannten Bestandteile können die eingesetzten Polymerisate noch weitere Copolymere-Bestandteile aufweisen können, die sich von ethylenisch ungesättigte Carbonsäuren, wie Acrylsäure und/oder Methacrylsäure und/oder Alkenen, wie Ethylen, Propylen und/oder Butadien ableiten.

Die Komponente a) des Bindersystems kann bis zu 30 Gew.-% eines Vernetzers enthalten. Die Art des Vernetzers und dessen Anteil sind abhängig von den gewählten Komponenten und sind dem Fachmann geläufig. In einer bevorzugten Ausführungsform sind die Vernetzer zugegen. Die Vernetzer bewirken eine Kondensationsreaktion, so dass es sich bei dem verfestigen Bindersystem bei Komponente a) um ein Kondensat, insbesondere ein Polykondensat handelt.
Bevorzugte Vernetzer sind Polyole, Polyamine, Polyalkanolamine oder deren Gemische.
Innerhalb der Polyole werden Glykole, Glykolether, Polyesterpolyole, Polyetherpolyole, Polysaccaride, Polyvinylalkole oder deren Gemische bevorzugt. Besonders bevorzugte Polyole sind Trimethylolpropan, Pentaerythritol, Ethylenglykol, Triethylenglykol.
Innerhalb der Polyamine werden Hexandiamin, Ethylendiamin, Melamine, Diethylentriamin, Triethylenetetramine, Aminoanilin, Aminoamide oder deren Gemische bevorzugt.
Innerhalb der Polyalkanolamine werden Alkanolamine, insbesondere Monoethanolamin, Diethanolamin, Triethanolamin, oder deren Gemische bevorzugt.

Bei dem erfindungsgemäß eingesetzten Polymerisat auf Basis von (i) vinylaromatischen Verbindungen und (ii) ungesättigten Carbonsäureanhydriden handelt es sich bevorzugt um ein Polymerisat aus Styrol und Maleinsäureanhydrid.

Bei dem erfindungsgemäß eingesetzten Polymerisat auf Basis von (i) vinylaromatischen Verbindungen und (ii) ungesättigten Carbonsäureimiden handelt es sich bevorzugt um ein Polymerisat aus Styrol und Maleinimid. Besonders bevorzugt handelt es sich um ein Polymerisat aus Styrol und Maleinimid, welches am N-Atom ggf. substituiert sein kann, ganz besonders bevorzugt Di-Alkyl-Amino-Alkylenamin-Maleinimid, insbesondere Dimethylaminopropylamin-Maleinimid. Das Molverhältnis Styrol zu Maleinimide beträgt vorzugsweise zwischen 1:1 bis 4:1. Die bevorzugten Ausführungsformen für Styrol-Maleinsäureanhydride, insbesondere im Hinblick auf Molekulargewicht und Polymerisationsgrad, gelten auch für Styrol-Maleinimide.

Das Molverhältnis von Styrol zu Maleinsaureanhydrid im Styrol-Maleinsäureanhydrid-Copolymere beträgt bevorzugt zwischen 1:4 und 4:1, besonders bevorzugt zwischen 1:1 und 4:1.

Das Molekulargewicht des Styrol-Maleinsäureanhydrid-Copolymeren beträgt bevorzugt zwischen 1600 bis 50000 g/mol, besonders bevorzugt zwischen 5000 und 50000 g/mol, insbesondere bevorzugt zwischen 7000 und 50000 g/mol.

Besonders vorteilhaft sind Styrol-Maleinsäureanhydrid-Copolymere die 2 bis 25 Gew.-%, insbesondere 5 bis 15 Gew.-% an Maleinsäureanhydrid-Bestandteilen ausweisen.

Des Weiteren ist es besonders vorteilhaft, wenn der Polymerisationsgrad der Styrol-Maleinsäureanhydrid-Copolymere zwischen 500 und 4000, insbesondere zwischen 900 und 3000, beträgt.

Neben den vorstehend genannten Eigenschaften ist es von Vorteil, wenn die erfindungsgemäß eingesetzten Styrol-Maleinsäureanhydrid-Copolymere eine Säurezahl von mindestens 200, besonders bevorzugt von mindestens 270, insbesondere von mindestens 350, aufweisen.

Die erfindungsgemäß eingesetzten Styrol-Maleinsäureanhydrid-Copolymere sind beispielsweise von Fa. Sartomer unter der Bezeichnung SMA 1000P als Pulver im Markt erhältlich.

Die erfindungsgemäß eingesetzten Styrol-Maleinsäureanhydrid-Copolymere umfassen auch die Partialester, welche durch Umsetzung mit Alkanolen mit 3 bis 20 Kohlenstoffatomen, vorzugsweise Hexanol oder Octanol, entstehen. Die Herstellung solcher Partialester ist beispielsweise in U.S. Patent 3342787 und U.S. Patent 3392155 beschrieben. Derartige Produkte sind beispielsweise von Fa. Sartomer unter der Bezeichnung SMA 17352 im Markt erhältlich.

Das Ausmaß an Halb- bzw. Partialveresterung des Styrol-Maleinsäureanhydrid-Copolymers beträgt im Allgemeinen etwa 10 bis 100 %, vorzugsweise 20 bis 80 %. Das heißt, dass etwa 5 bis 50 %, vorzugsweise 20 bis 40 %, der Gesamtanzahl von Carboxylgruppen des Copolymers mit Alkohol verestert sind.

In einer bevorzugten Ausführungsform der Erfindung wird das Polymerisate auf Basis von (i) vinylaromatischen Verbindungen, insbesondere Styrol, a-Methylstyrol und/oder Vinyltoluol, und (ii) ungesättigten Carbonsäureanhydriden, insbesondere Maleinsäureanhydrid, und/oder ungesättigten Carbonsäureimide, insbesondere Maleinimid, und/oder ethylenisch ungesättigten Dicarbonsäure, insbesondere Itakonsäure, durch radikalische Polymerisation hergestellt und einer speziellen Aufreinigung unterzogen.
Bei der radikalischen Polymerisation werden Radikalstarter bzw. Initiatoren wie Peroxide oder Hydroperoxide zugesetzt. Ein Beispiel für einen kommerziell verwendeten Radikalstarter ist Isopropylbenzol-Hydroperoxid (Cumol- Hydroperoxid oder auch "CHP" cumene hydroperoxide). Das bei der Polymerisation als Nebenprodukt entstehende Acetophenon ist eine besonders störende Verunreinigung, die neben Geruchsproblemen auch zu Farbproblemen führt. Eine Beseitigung derartiger Verunreinigungen, beispielsweise durch Vakuumdestillation, ist nicht möglich, so dass es einer speziellen Aufreinigung bedarf. Hierzu wird das erfindungsgemäß einzusetzende Polymerisat zuvor mit einem Lösemittel versetzt, welches mit den Verunreinigungen ein Azeotrop bildet; somit können diese Verunreinigungen durch Bildung von Azeotropen weitestgehend entfernt werden. Auf diese Art und Weise kann der Gehalt an Verunreinigungen, wie Isopropylbenzol (Cumol) bzw. Acetophenon, deutlich verringert werden. Beträgt dieser vor der Behandlung ca. 0,2 Gew.% an Isopropylbenzol (Cumol) und ca. 0,1 Gew.% an Acetophenon, so kann dieser deutlich verringert werden. Der Isopropylbenzol (Cumol) Gehalt kann um 90% und mehrt verringert werden; der Acetophenon Gehalt um mehr als 60%. Somit beträgt der Gehalt an Isopropylbenzol (Cumol) maximal 0,02 Gew.-% und an der Acetophenon maximal 0,04 Gew.-%.

Die als Komponente a) erfindungsgemäß eingesetzten Polymerisate können durch Umsetzung mit Aminen oder Ammoniak auch in Form der Polyamidsäuren eingesetzt werden. Diese Verbindungen werden auch als Polyamic Acid bezeichnet. Üblicherweise wird hierzu das Polyanhydrid in einem wässrigen Medium vorgelegt und mit Amin bzw. Ammoniak umgesetzt. Die resultierende Polyamidsäure verfügt über ein reaktive Amid- und Carboxyl-Gruppe, welche vorzugsweise mit vorstehend beschriebenen Vernetzern zur Reaktion gebracht werden können. Die vorstehend als bevorzugte Vernetzer bezeichneten Verbindungen sind auch für die vorliegenden Polyamidsäuren bevorzugt. Weiterhin finden sich geeignete Polyamidsäure bzw. deren Derivate in U.S. Patent 6706853. Die in U.S. Patent 6706853 offenbarten Polyamidsäuren bzw. Polyamidsäure-Derivate sind auch für die vorliegende Erfindung geeignet und werden von dieser ebenfalls umfasst.

In einer weiteren bevorzugten Ausführungsform, wenn eine Polyamidsäure verwendet wird, ist das organische Vernetzungsmittel ein wasserlösliches Michael-Addukt-Vernetzungsmittel mit reaktiven Hydroxylendgruppen, die durch die Additionsreaktion einer Michael-Akzeptorverbindung mit einer an eine elektronenziehende Gruppe gebundenen alpha-beta ungesättigten Stelle und einer nucleophilen Verbindung gebildet werden, die als ein zur Reaktion mit dem Michael-Akzeptor fähiger Michael-Donor fungiert. Solch ein Michael-Addukt kann mit der wasserlöslichen Polyamidsäure eine kovalente Vernetzungsreaktion eingehen. Solche Michael-Akzeptoren können mindestens eine Vinylgruppe enthalten (d. h. eine oder mehrere Vinylgruppen), die mit den elektronenziehenden Gruppen verbunden sind. Bevorzugte elektronenziehende Gruppen umfassen Estergruppen, Säuregruppen, Amidgruppen, Nitrogruppen, Nitrilgruppen, Ketongruppen, Aldehydgruppen sowie Mischungen davon.
Bevorzugte Michael-Akzeptoren in der Form von alpha-beta ungesättigten Estern umfassen Acrylate wie z. B. Ethylacrylat, Propylacrylat, Hydroxyethylacrylat, Triethylenglykoldiacrylat, Trimethylolpropantriacrylat, Pentaerythrittetraacrylat, Epoxyacrylate wie z. B. Bisphenol-A-Epoxyacrylat, epoxidiertes Ölacrylat, Styrol-Maleinsäureanhydridacrylat, Polyester-Polyol-Polyacrylate, Polyurethanacrylate, metallische Acrylate wie z. B. Zinkdiacrylat, Polyamidacrylate, Acryloylpropantriethoxysilan, Di- und Poly(dimethylsilanol)diacrylat, usw.; Methacrylate wie z. B. Methylmethacrylat, Hydroxyethylmethacrylat, Triethylenglykoldimethacrylat, Trimethylolpropantrimethacrylat, Epoxymethacrylate, Polyestermethacrylate, Polyurethanmethacrylate, Polyamidmethacrylate, Styrol-Maleinsäureanhydridmethacrylat, usw.; Crotonate wie z. B. Methylcrotonat, Hydroxyethylcrotonat, Epoxycrotonate, Urethancrotonate, Polyethercrotonate, Polyestercrotonate, usw.; Maleate wie z. B. Monomethylmaleat, Dimethylmaleat, Monohydroxyethylmaleat, Dihydroxyethylmaleat, ungesättigte, Maleatfunktionalitäten enthaltende Ester, Epoxymaleatester usw.; Fumarate wie z. B. Dimethylfumarat, Monohydroxyethylfumarat, Dihydroxyethylfumarat, ungesättigte, Fumaratfunktionalitäten enthaltende Ester, Epoxyfumaratester, usw.

Bevorzugte Michael-Akzeptoren in der Form von alpha-beta ungesättigten Säuren umfassen Acrylsäure, Methacrylsäure, Crotonsäure, Maleinsäure, Fumarsäure, 2-Methylmaleinsäure, Itaconsäure, 2-Methylitaconsäure, Propinsäure, Acetylendicarbonsäure, usw.

Bevorzugte Michael-Akzeptoren in der Form von alpha-beta ungesättigten Amiden umfassen Acrylamide, Methacrylamide, usw.

Bevorzugte Michael-Akzeptoren in der Form von alpha-beta ungesättigten Nitroverbindungen umfassen Vinylnitrat, Nitroethylen, Nitroacetylen, usw.

Bevorzugte Michael-Akzeptoren in der Form von alpha-beta ungesättigten Nitrilverbindungen umfassen Acrylonitril, Methacrylonitril, Crotonitril, usw.

Bevorzugte Michael-Akzeptoren in der Form von alpha-beta ungesättigten Ketonverbindungen umfassen Methylvinylketon, Ethylvinylketon, usw.
Bevorzugte Michael-Akzeptoren in der Form von alpha-beta ungesättigten Aldehydverbindungen umfassen Acrolein, Methylacrolein, usw.

Der alpha-beta ungesättigte Michael-Akzeptor kann gegebenenfalls zusätzliche chemische Funktionalitäten wie z. B. Ethergruppen, Estergruppen, Epoxygruppen, Urethangruppen, Harnstoffgruppen, aliphatische Kohlenwasserstoffgruppen, aromatische Kohlenwasserstoffgruppen usw. enthalten. Michael-Akzeptoren in der Form von Oligomeren der Glykole und Polyole können gleichermaßen verwendet werden.

Maleinsäureanhydrid, Acrylsäureanhydrid usw. können bei der Bildung des Michael-Addukt-Vernetzungsmittels ebenfalls als der Michael-Akzeptor verwendet werden.

Die Michael-Akzeptoren gehen mit einer nucleophilen Verbindung, die als ein Michael-Donor dient, ohne weiteres eine Additionsreaktion durch eine kovalente Bindung ein, um ein wasserlösliches Michael-Addukt-Vernetzungsmittel mit reaktiven Hydroxylgruppen zu bilden. In bevorzugten Ausführungsformen ist der zur Bildung des wasserlöslichen Michael-Addukt Vernetzungsmittels verwendete Michael-Donor ein Alkylamin, ein Alkanolamin, ein Thiol und Mischungen davon. Bevorzugte Amine sind Butylamin, Ethylendiamin, 1,6-Hexandiamin, Diethylentriamin, Aminoamide, p-Aminophenol, Melamin, usw. Weitere bevorzugte Amine sind Mono- oder Dialkanolamine mit 2 bis 4 Kohlenstoffatomen pro Alkanolgruppe. Besondere bevorzugte Monoalkanolamine umfassen Ethanolamin, Propanolamin, Butanolamin und N-Methylethanolamin. Besondere bevorzugte Dialkanolamine umfassen Diethanolamin, Dipropanolamin, Diisopropylamin und Dibutanolamin. Ein besonders bevorzugtes Amin als Michael-Donor ist Dialkanolamin. Bevorzugte Thiole als Michael-Donoren sind Hydroxyethylthiol, Hydroxypropylthiol, usw.

Das wasserlösliche Michael-Addukt-Vernetzungsmittel kann gebildet werden, indem der Michael-Akzeptor und der Michael-Donor in molaren Verhältnissen von 1:1 unter Rühren bei einer Temperatur von Raumtemperatur bis 95 °C über einen Zeitraum von ungefähr 10 bis 360 Minuten zur Reaktion gebracht wird. In einigen Ausführungsformen kann das Michael-Addukt gegebenenfalls - zumindest teilweise - als ein Salz vorliegen. Das resultierende Michael-Addukt weist zusätzlich zu seiner Wasserlöslichkeit üblicherweise eine geringe Viskosität von etwa 5 bis 500 cps (vorzugsweise ungefähr 9 bis 100 cps) auf, wenn es mit einer Konzentration von 50 Gewichtsprozent in Wasser gelöst wird, eine geringe Oberflächenspannung von etwa 5 bis 50 N/m (vorzugsweise 10 bis 30 N/m), wenn es mit einer Konzentration von 10 Gewichtsprozent in Wasser gelöst wird, einen geringen Schmelzpunkt von etwa -50 bis 150 °C (vorzugsweise -20 bis 100 °C), und einen geringen Dampfdruck von weniger als 1,0 mm Hg auf. Solche Michael-Addukte können üblicherweise auf einer relativ wirtschaftlichen Grundlage gebildet werden und können ohne weiteres verarbeitet werden.
Das resultierende wasserlösliche Michael-Addukt zeigt üblicherweise ein Hydroxyäquivalent von etwa 50 bis 1000, und vorzugsweise von etwa 70 bis 150, bestimmt mittels Titration oder Spektroskopie.

Insofern das Bindersystem bzw. die Komponente a) des Bindersystems als wässrige Polymerdispersion eingesetzt werden soll, können zur Stabilisierung üblicherweise und bekannte Emulgatoren bzw. Schutzkolloide zugesetzt werden. Diese sind dem Fachmann bekannt (vgl. Houben-Weyl, Methoden der org. Chemie, Bd. XIV/1, 1961, Stuttgart). Als Beispiele für Emulgatoren sind Polyglycolether, Fettalkohol Polyglycolether, Phosphorsäureester und deren Salze, sulfonierte Paraffinkohlenwasserstoffe, höhere Alkylsulfate (wie z.B. Laurylsulfat), Alkalimetallsalze von Fettsäuren, wie Natriumstearat oder Natriumoleat, Schwefelsäurehalbester ethoxylierter Fettsäurealkohole, Salze von Estern- und Halbestern von Alkylpolyoxyethylensulfosuccinaten, Salze von sulfonierten Alkylaromaten, wie z.B. Natriumdodecylbenzolsulfonat, Ethoxylierte C4-C12-Alkylphenole und deren Sulfonierungsprodukte sowie Ester der Sulfobernsteinsäure. Beispiele für Schutzkolloide sind Alkylhydroxyalkylcellulosen, teilweise oder vollständig hydrolysierte Polyvinylalkohole und -copolymere derselben, Acrylsäure, Homo- und Copolymere und teilweise neutralisierte Salze derselben, Acrylamid-Copolymere, Polyacrylat-Copolymere und Salze derselben, Carboxyalkylcellulose, wie z.B. Carboxymethylcellulose und deren Salze.

Das Bindersystem umfasst keine Polymerisate welche durch Polymerisation von konjugierten aliphatischen Dienen, insbesondere Butadien, Isopren, Pentadien-1,3, Dimethylbutadien und/oder Cyclopentadien, erzeugt wurden.

Insofern das Bindersystem bzw. die Komponente a) des Bindersystems als wässrige Polymerdispersion eingesetzt werden soll, beträgt die Viskosität vorzugsweise 10 bis 2200 mPa*s, insbesondere 100 bis 1000 mPa*s, besonders bevorzugt 200 bis 800 mPa*s (bestimmt gemäß DIN EN ISO 3219 und 23°C).

Die erfindungsgemäß eingesetzten Stärken unterliegen keiner Einschränkung, müssen jedoch mit der Komponente a) und ggf. Komponente c) kompatibel sein.

Geeignete erfindungsgemäße Stärken sind natürliche, - so genannte - native, Stärken und modifizierte Stärken, wie kationische oder anionische Stärken, oder Stärkederivate (sog. Chemisch modifizierte Stärken). Allgemein vorteilhaft sind Stärken, die eine ausreichende Kaltlöslichkeit und/oder Heißlöslichkeit besitzen.

Eine Gruppe von Stärken, die im Rahmen der Erfindung zum Einsatz gelangen können, umfasst die aus pflanzlichen Rohstoffen gewonnenen Stärken. Hierzu zählen unter anderem Stärken aus Knollen, wie Kartoffeln, Maniok, Maranta, Batata, aus Samen, wie Weizen, Mais, Roggen, Reis, Gerste, Hirse, Hafer, Sorghum, aus Früchten, wie Kastanien, Eicheln, Bohnen, Erbsen, u. a. Hülsenfrüchten, Bananen, sowie aus Pflanzenmark, z.B. der Sagopalme.

Die im Rahmen der Erfindung verwendbaren Stärken bestehen im Wesentlichen aus Amylose und Amylopektin, in wechselnden Mengenverhältnissen.

Die Molekulargewichte der erfindungsgemäß nützlichen Stärken können über einen weiten Bereich variieren. Die im Wesentlichen aus einem Gemisch von Amylose und Amylopektin bestehenden Stärken, haben vorzugsweise Molekulargewichte M_{w} im Bereich zwischen 5x10² und 1x10⁸, besonders bevorzugt zwischen 5x10⁴und 1x10⁷.

Neben Stärken nativen pflanzlichen Ursprungs sind auch Stärken, die chemisch modifiziert sind, fermentativ gewonnen werden, rekombinanten Ursprungs sind oder durch Biotransformation (Biokatalyse) hergestellt wurden, gleichermaßen bevorzugt.

Synonym für den Begriff "Biotransformation" verwendet man auch den Begriff "Biokatalyse".

Unter "chemisch modifizierten Stärken" versteht man solche Stärken, bei denen auf chemischem Wege die Eigenschaften im Vergleich zu den natürlichen Eigenschaften verändert wurden. Dies wird im Wesentlichen durch polymeranaloge Umsetzungen erreicht, bei denen Stärke mit mono-, bi- oder polyfunktionellen Reagenzien bzw. Oxidationsmitteln behandelt wird. Dabei werden vorzugsweise die Hydroxylgruppen der Stärke durch Veretherung, Veresterung oder selektive Oxidation umgewandelt oder die Modifizierung beruht auf einer radikalisch initiierten Pfropfcopolymerisation von copolymerisierbaren ungesättigten Monomeren auf das Stärkerückgrat.

Zu besonderen chemisch modifizierten Stärken gehören unter anderem Stärkeester, wie Xanthogenate, Acetate, Phosphate, Sulfate, Nitrate, Stärkeether, wie z. B. nichtionische, anionische oder kationische Stärkeether, oxidierte Stärken, wie etwa Dialdehydstärke, Carboxystärke, Persulfat-abgebaute Stärken und ähnliche Substanzen.

"Fermentative Stärken" sind im Sprachgebrauch der Erfindung Stärken, die durch fermentative Prozesse unter Verwendung in der Natur vorkommender Organismen, wie Pilzen, Algen oder Bakterien gewonnen werden oder unter Einschaltung und Mithilfe von fermentativen Prozessen gewonnen werden können. Beispiele für Stärken aus fermentativen Prozessen umfassen neben anderen Gum Arabicum und verwandte Polysaccharide (Gellan Gum, Gum Ghatti, Gum Karaya, Gum Tragacauth), Xanthan, Emulsan, Rhamsan, Wellan, Schizophyllan, Polygalacturonate, Laminarin, Amylose, Amylopektin und Pektine.

Mit "Stärken rekombinanten Ursprungs" oder "rekombinante Stärken" meint die Erfindung im einzelnen Stärken, die durch fermentative Prozesse unter Verwendung in der Natur nicht vorkommender Organismen, aber unter Zuhilfenahme von gentechnischen Methoden modifizierten natürlichen Organismen, wie Pilzen, Algen oder Bakterien gewonnen werden oder unter Einschaltung und Mithilfe von fermentativen Prozessen gewonnen werden können. Beispiele für Stärken aus fermentativen, gen-technisch modifizierten Prozessen sind neben anderen Amylose, Amylopektin und Polyglucane.

"Durch Biotransformation hergestellte Stärken" bedeutet im Rahmen der Erfindung, dass Stärken, Amylose, Amylopektin oder Polyglucane durch katalytische Reaktion von monomeren Grundbausteinen, im allgemeinen oligomeren Sacchariden, insbesondere Mono- und Disacchariden, hergestellt werden, indem ein Biokatalysator (auch: Enzym) unter speziellen Bedingungen verwendet wird. Beispiele für Stärken aus biokatalytischen Prozessen sind neben anderen Polyglucan und modifizierte Polyglucane, Polyfructan und modifizierte Polyfructane.

Des Weiteren werden auch Derivate der einzelnen genannten Stärken von der Erfindung umfasst. Dabei bedeuten die Begriffe "Derivate von Stärken" oder "Stärkederivate" ganz allgemein modifizierte Stärken, d. h. solche Stärken, bei denen zur Veränderung ihrer Eigenschaften das natürliche Amylose/Amylopektin-Verhältnis verändert wurde, eine Vorverkleisterung durchgeführt wurde, die einem partiellen hydrolytischen Abbau unterzogen wurden oder die chemisch derivatisiert wurden.

Zu besonderen Derivaten von Stärken gehören, unter anderem, oxidierte Stärken, z.B. Dialdehydstärke oder sonstige Oxidationsprodukte mit Carboxylfunktionen, oder native ionische Stärken (z.B. mit Phosphatgruppen) oder ionisch weiter modifizierte Stärken, wobei sowohl anionische als auch kationische Modifizierungen gemeint sind.

Zu den destrukturierten Stärken, die im Rahmen der Erfindung eingesetzt werden können, gehören solche, die z.B. mittels Glyzerin so homogenisiert worden sind, dass in der Röntgendiffraktion keine kristallinen Reflexe mehr auftreten und im Polarisationsmikroskop Stärkekörner oder doppelbrechende Regionen bei tausendfacher Vergrößerung nicht mehr sichtbar sind. In diesem Zusammenhang wird auf die DE-A1-3931363 verwiesen, auf deren Offenbarung zu den destrukturierten Stärken auch Bestandteil dieser Beschreibung ist.

Die erfindungsgemäß eingesetzten Stärken sind im Markt z. B. von Avebe, Cargill, National Starch, Penford Products Co Purac oder Südstärke erhältlich.

Besonders vorteilhaft sind Stärken, die eine ausreichende Kaltlöslichkeit und/oder eine ausreichende Heißlöslichkeit aufweisen. Eine ausreichende Löslichkeit ist dann gegeben, wenn die Viskosität des Bindersystems eine entsprechende Verarbeitbarkeit zulässt.

Die als Komponente c) erfindungsgemäß eingesetzten Polyvinylacetate sind für sich alleine genommen bekannt. Als Polyvinylacetate werden Homopolymere des Vinylacetats und Co- bzw. Ter-Polymerisate des Vinylacetats mit Acrylsäure, Acrylaten, Crotonsäure, Vinyllaurat, Vinylchlorid oder auch Ethylen verstanden.

Bevorzugt werden Homopolymere des Polyvinylacetats eingesetzt, die bis zu 5 Mol-% an weiteren Bestandteilen enthalten, die sich von anderen Monomeren als Vinylacetat ableiten.

Die Glastemperatur des erfindungsgemäß eingesetzten Polyvinylacetats beträgt vorzugsweise 18 bis 45°C und ist vom Polymerisationsgrad abhängig.

Der Polymersiationsgrad des erfindungsgemäß eingesetzten Polyvinylacetats beträgt vorzugsweise 100 bis 5000.

Die Molekulargewicht (Gewichtsmittel) des erfindungsgemäß eingesetzten Polyvinylacetats beträgt vorzugsweise zwischen 10000 und 1500000 g/mol.

Die erfindungsgemäß eingesetzten Polyvinylacetate sind beispielsweise von Celanese unter der Bezeichnung Mowilith als Dispersionen (60%) bzw. Lösungen im Markt erhältlich.

Insofern das Bindersystem bzw. die Komponente c) des Bindersystems als wässrige Polymerdispersion eingesetzt werden soll, können zur Stabilisierung üblicherweise und bekannte Emulgatoren bzw. Schutzkolloide zugesetzt werden. Diese sind dem Fachmann bekannt (vgl. Houben-Weyl, Methoden der org. Chemie, Bd. XIV/1, 1961, Stuttgart). Als Beispiele für Emulgatoren sind Polyglycolether, Fettalkohol Polyglycolether, Phosphorsäureester und deren Salze, sulfonierte Paraffinkohlenwasserstoffe, höhere Alkylsulfate (wie z.B. Laurylsulfat), Alkalimetallsalze von Fettsäuren, wie Natriumstearat oder Natriumoleat, Schwefelsäurehalbester ethoxylierter Fettsäurealkohole, Salze von Estern- und Halbestern von Alkylpolyoxyethylensulfosuccinaten, Salze von sulfonierten Alkylaromaten, wie z.B. Natriumdodecylbenzolsulfonat, Ethoxylierte C4-C12-Alylphenole und deren Sulfonierungsprodukte sowie Ester der Sulfobernsteinsäure. Beispiele für Schutzkolloide sind Alkylhydroxyalkylcellulosen, teilweise oder vollständig hydrolysierte Polyvinylalkohole und -copolymere derselben, Acrylsäure, Homo- und Copolymere und teilweise neutralisierte Salze derselben, Acrylamid-Copolymere, Polyacrylat-Copolymere und Salze derselben, Carboxyalkylcellulose, wie z.B. Carboxymethylcellulose und deren Salze.

Das Bindersystem bzw. die Komponente c) des Bindersystems ist insbesondere eine Polyvinylalkohol-stabilisierte Polyvinylacetat-Dispersion.

Das erfindungsgemäß eingesetzte Bindersystem kann noch bis zu 10 Gew.-% Additive enthalten. Hierbei handelt es sich um handelsübliche Zusätze wie Konservierungsmittel, Stabilisatoren, Anti-Oxidantien, Entschäumer, Hydrophoberungsmittel, UV-Stabilisatoren und/oder Pigmente. Diese sind zum Teil in den Handelsprodukten enthalten und dienen der Lager- und Transport-Stabilisierung oder können auch nachträglich zugesetzt werden um die kundenseitigen Spezifikationen zu erfüllen.

Das erfindungsgemäß eingesetzte Bindersystem kann noch bis zu 60 Gew.-% Füllstoffe enthalten. Bei den Füllstoffen spielt insbesondere das Aluminium-TriHydrat (ATH) eine wesentliche Rolle. Daneben können auch andere inerte Materialien verwendet werden, wie z.B. Silikate, Kaolin, Tonmineralien entsprechenden Korngrößen, usw.

Die Auftragsmenge des erfindungsgemäß eingesetzten Bindersysterns auf das textile Flächengebilde beträgt nach der Trocknung vorzugsweise zwischen 13 und 30 Gew.-% Trockenbinder, bezogen auf das Gesamtgewicht des unbehandelten textilen Flächengebildes.

Der Begriff "textiles Flächengebilde" ist im Rahmen dieser Beschreibung in seiner breitesten Bedeutung zu verstehen. Dabei kann es sich um alle Gebilde aus Fasern handeln die nach einer flächenbildenden Technik hergestellt worden sind. Bei den faserbildenden Materialien handelt es sich um Naturfasern, Mineralfasern, Glasfasern, Fasern aus synthetischen Produkten und/oder Fasern aus synthetisierten Polymeren. Als textiles Flächengebilde im Sinne der vorliegenden Erfindung werden insbesondere Gewebe, Gelege, Gestricke, Gewirke, Vliese, besonders bevorzugt Vliese, verstanden.

Bei den textilen Flächengebilden auf Basis von Mineralfasern und/oder Glasfasern handelt es sich insbesondere um Vliese auf Basis von Mineralfasern und/oder Glasfasern. Die vorstehend genannten Vliese auf Basis von Mineralfasern und/oder Glasfasern können auch mit weiteren textilen Flächengebilden, insbesondere Vliesen, kombiniert werden.

Die erfindungsgemäß eingesetzten Glasfaser-Vliese können mittels aller bekannten Methoden hergestellt werden. Insbesondere sind Vliese geeignet, die mit Hilfe des Nasslegeverfahrens, des Tockenlegeverfahrens oder der Air-Laid Technik hergestellt werden. Im Rahmen des Herstellprozesses, insbesondere beim Nasslegeverfahren, können diese Vliese prozessbedingt auch geringe Anteile chemischer Hilfsstoffe enthalten, z. B. Verdickungsmittel, Entschäumer, etc. Diese Stoffe stammen aus dem Kreislaufwasser bei der Vliesherstellung.

Die erfindungsgemäß eingesetzten Mineralfaser-Vliese können durch das erfindungsgemäße Bindersystem und zusätzlich durch mechanische Maßnahmen, z.B. Vernadelung, oder hydrodynamische Vernadelung, verfestigt sein. Besonders bevorzugt handelt es sich um Krempelvliese aus Filamenten, d.h. unendlich langen Fasern, oder aus Stapelfasern. Der durchschnittliche Durchmesser der Mineralfasern beträgt zwischen 8 und 15 µm, vorzugsweise zwischen 10 und 12 µm.

Geeignete Mineralfasern umfassen Alumosilikat-, Keramik-, Dolomitfasern oder Fasern von Vulkaniten wie z.B. Basalt-, Diabas-, Melaphyr. Diabase und Melaphyre. Diese werden zusammengefasst als Paläobasalte bezeichnet, wobei Diabas auch gerne als Grünstein bezeichnet wird.

Das Flächengewicht der erfindungsgemäß eingesetzten Mineralfaservliese beträgt zwischen 20 und 350 g/m², vorzugsweise zwischen 25 und 90 g/m². Die vorstehenden Angaben sind auch für die nachfolgend beschriebenen Glasvliese gültig.

Die erfindungsgemäß eingesetzten Glasfaser-Vliese können durch Binder oder aber durch mechanische Maßnahmen, z.B. Vernadelung, oder hydrodynamische Vernadelung, verfestigt sein. Bei den Glasfasern kann es sich um Filamente oder endliche bzw. geschnittene Glasfasern handeln, wobei im letztgenannten Falle die Länge der Fasern zwischen 1 und 40 mm, vorzugsweise 4 bis 20 mm, beträgt. Der durchschnittliche Durchmesser der Glasfasern beträgt zwischen 6 und 20 µm, vorzugsweise zwischen 8 und 15 µm.

Geeignete Glasfasern umfassen Glastypen wie E-Glas, S-Glas, R-Glas oder C-Glas, aus wirtschaftlichen Gründen wird E-Glas oder C-Glas bevorzugt.

In einer bevorzugten Ausführungsform enthalten Vliese auf Basis von Mineralfasern und/oder Glasfasern zusätzliche Polymerfasern. Bei den Polymerfasern handelt es sich insbesondere um die gleichen synthetischen Polymeren wie nachfolgend beschrieben. Bevorzugt werden diese in Form von Stapelfasern eingebracht.

Innerhalb der textilen Flächengebilde auf Basis von synthetischen Polymeren sind Vliese aus Fasern aus synthetischen Polymeren, insbesondere Spinnvliese, sogenannte Spunbonds, die durch eine Wirrablage frisch schmelzgesponnener Filamente erzeugt werden, bevorzugt. Sie bestehen aus Endlos-Synthesefasern aus schmelzspinnbaren Polymermaterialien. Geeignete Polymermaterialien sind beispielsweise Polyamide, wie z.B. Polyhexamethylen-diadipamid, Polycaprolactam, aromatische oder teilaromatische Polyamide ("Aramide"), aliphatische Polyamide, wie z.B. Nylon, teilaromatische oder vollaromatische Polyester, Polyphenylensulfid (PPS), Polymere mit Ether- und Keto-gruppen, wie z.B. Polyetherketone (PEK) und Poly-etheretherketon (PEEK), Polyolefine, wie z.B. Polyethylen oder Polypropylen, oder Polybenzimidazole.

Bevorzugt bestehen die Spinnvliese aus schmelzspinnbaren Polyestern. Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2 bis 4 C-Atome, wobei das Ethylenglycol besonders geeignet ist. Besonders vorteilhaft sind Spinnvliese, die zu mindestens 85 mol % aus Polyethylenterephthalat bestehen. Die restlichen 15 mol % bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Diolen, z. B. von Propandiol oder Butandiol, von Di- oder Triethylenglycol oder, sofern in geringer Menge vorhanden, von Polyglycol mit einem Molgewicht von ca. 500 bis 2000.

Besonders bevorzugt sind Polyester, die mindestens 95 mol % Polyethylenterephthalat (PET) enthalten, insbesondere solche aus unmodifiziertem PET.

Die Einzeltiter der Polyesterfilamente im Spinnvlies betragen zwischen 1 und 16 dtex, vorzugsweise 2 bis 8 dtex.

In einer weiteren Ausführungsform der Erfindung kann die textile Fläche bzw. das Spinnvlies auch ein schmelzbinderverfestigter Vliesstoff sein, welcher Träger- und Schmelzklebefasern enthält. Die Träger- und Schmelzklebefasern können sich von beliebigen thermoplastischen fadenbildenden Polymeren ableiten. Trägerfasern können sich darüber hinaus auch von nicht schmelzenden fadenbildenden Polymeren ableiten. Derartige schmelzbinderverfestigte Spinnvliese sind beispielsweise in EP-A-0,446,822 und EP-A-0,590,629 beschrieben.

In einer bevorzugten Ausführungsform enthalten Vliese auf Basis von synthetischen Polymerfasern zusätzliche Mineralfasern und/oder Glasfasern. Bei den zusätzlichen Mineralfasern und/oder Glasfasern handelt es sich insbesondere um die gleichen Mineralfasern und/oder Glasfasern wie vorstehend beschrieben. Bevorzugt werden geschnittene Glasfasern eingebracht.

In einer bevorzugten Ausführungsform der Erfindung ist das textile Flächengebilde einer mechanischen und einer chemischen Verfestigung mit dem erfindungsgemäßen Bindersystem unterzogen worden. Eine derartige Verfestigung verbessert die Anwendungseigenschaften der Trägereinlage weiter.

Die die textilen Flächengebilde, insbesondere die Vliesstoffe, aufbauenden Filamente oder Stapelfasern können einen praktisch runden Querschnitt besitzen oder auch andere Formen aufweisen, wie hantel-, nierenförmige, dreieckige bzw. tri- oder multilobale Querschnitte. Es sind auch Hohlfasern und Bi- oder Mehrkomponentenfasern einsetzbar. Ferner lässt sich die Schmelzklebefaser auch in Form von Bi- oder Mehrkomponentenfasern einsetzen.

Das textile Flächengebilde kann ein oder mehrschichtig aufgebaut sein, wobei sich die jeweiligen Schichten durch unterschiedliche Fasertypen und/oder Materialien unterscheiden können. Es können jedoch auch Schichten gleichen Materialien und Fasertypen eingesetzt werden und die Unterschiedlichkeit durch unterschiedliche Nachbehandlungen bzw. Verfestigungen hervorgerufen werden.

Das Gesamtflächengewicht des textilen Flächengebildes, insbesondere des Spinnvlieses, beträgt zwischen 20 und 500 g/m², vorzugsweise zwischen 40 und 400 g/m², insbesondere zwischen 90 und 250 g/m².

In einer weiteren Ausführungsform der Erfindung weisen derartige Trägereinlagen mindestens eine Verstärkung auf. Diese ist vorzugsweise derart gestaltet, dass die Verstärkung eine Kraft aufnimmt, so dass sich im Kraft-Dehnungs-Diagramm (bei 20 °C) die Bezugskraft der Trägereinlage mit Verstärkung verglichen mit der Trägereinlage ohne Verstärkung im Bereich zwischen 0 und 1 % Dehnung an mindestens einer Stelle um mindestens 10 % unterscheidet.

In einer weiteren Ausführungsform kann die Verstärkung der Trägereinlage auch so eingebaut werden, dass eine Kraftaufnahme durch die Verstärkung erst bei höheren Dehnungen erfolgt.

Bevorzugt werden als Verstärkungsfäden Multifilamente und/oder Monofilamente auf Basis von Aramiden, vorzugsweise sogenannte Hoch-Modul-Aramide, Kohlenstoff, Glas, Glas-Rovings, Mineralfasern (Basalt), hochfeste Polyester-Monofilamente oder -Multifilamente, hochfeste Polyamid-Monofilamente oder - Multifilamente, sowie sogenannte Hybridmultifilamentgarne (Garne enthaltend Verstärkungsfasern und tieferschmelzende Bindefasern) oder Drähte (Monofilamente) aus Metallen oder metallischen Legierungen eingesetzt.

Bevorzugte Verstärkungen bestehen aus wirtschaftlichen Gründen aus Glas-Multifilamenten in Form von - im Wesentlichen - parallelen Fadenscharen oder Gelegen. Meist erfolgt nur eine Verstärkung in Längsrichtung der Vliesstoffe durch - im Wesentlichen -parallel laufende Fadenscharen.

Die Verstärkungsfäden können als solche oder auch in Form eines eigenen textilen Flächengebildes, beispielsweise als Gewebe, Gelege, Gestrick, Gewirke oder als Vlies eingesetzt werden. Bevorzugt werden Verstärkungen mit zueinander parallel laufenden Verstärkungsgarnen, also Kettfadenscharen, sowie Gelege oder Gewebe.

Die Messung der Bezugskraft erfolgt nach EN 29073, Teil 3, an 5 cm breiten Proben bei 200mm Einspannlänge. Der Zahlenwert der Vorspannkraft, angegeben in Centinewton entspricht dabei dem Zahlenwert der Flächenmasse der Probe, angegeben in Gramm pro Quadratmeter.

Die Verstärkung der Trägereinlage kann durch Einbau der Verstärkungen im textilen Flächengebilde, an mindestens einer Seite des textilen Flächengebildes oder aber an einer beliebigen Stelle der Trägereinlage erfolgen, insbesondere in weiteren textilen Flächengebilden, die vom ersten textilen Flächengebilde verschieden sind oder als eigenständiges textiles Flächengebilde.

Die erfindungsgemäßen Trägereinlagen, welche das erfindungsgemäße verfestigte textile Flächengebilde enthalten, können mit weiteren Funktionsschichten ausgerüstet werden. Hierunter sind Maßnahmen bzw. Funktionsschichten zu verstehen, welche die beispielsweise die Wurzelfestigkeit der Trägereinlage zu erhöhen. Diese sind ebenfalls Gegenstand der Erfindung.

Die erfindungsgemäße Trägereinlage kann neben dem bereits beschriebenen erfindungsgemäßen textilen Flächengebilde noch weitere textile Flächengebilde aufweisen. Bevorzugt sind diese weiteren textilen Flächengebilde von dem erstgenannten textilen Flächengebilde verschieden, d.h. bestehen aus einem anderen Material.

Insofern das textile Flächengebilde aus synthetischen Polymeren aufgebaut wird, kann es zur Optimierung der anwendungstechnischen Eigenschaften notwendig werden, weitere textile Flächengebilde in der erfindungsgemäßen Trägereinlage einzubauen.

Für den Fachmann völlig überraschend, wird durch den erfindungsgemäßen Einsatz des Bindersystems die Eigenschaften des textilen Flächengebildes verbessert werden. So erhöht sich beispielsweise die Knickfestigkeit eines Glasfaservlieses bei Verwendung des erfindungsgemäßen Bindersystems deutlich. Auch werden die Abdichteigenschaften verbessert bzw. die Porosität verringert, ohne dass eine Verschlechterung des Bruchwiderstands (200C°) eintritt.

Des Weiteren ermöglicht der erfindungsgemäße Einsatz des Binders Heißfestigkeiten von mehr als 70N/5cm (200°C) wobei keine Verschlechterung durch Gelbstichigkeit beobachtet wird. Dies ist insbesondere bei Verwendung als PVC Fußbodenträger von großer Bedeutung. Neben der guten Heißfestigkeit zeigen die mittels des erfindungsgemäßen Bindersystems verfestigten Materialien eine hohe Knickfestigkeit.

Das erfindungsgemäß verfestigte textile Flächengebilde kann selbst als Trägereinlage oder in Kombination mit weiteren textilen Flächengebilden als Trägereinlage für beschichteten Unterspann-, Dach- und Dichtungsbahnen sowie als textiler Rücken oder textile Verstärkung in Fußböden, insbesondere Teppichböden und PVC-Fußböden verwendet werden, die ebenfalls Gegenstand der vorliegenden Erfindung sind.

Das erfindungsgemäß verfestigte textile Flächengebilde kann selbst als Trägereinlage oder in Kombination mit weiteren textilen Flächengebilden als Trägereinlage zur Herstellung von beschichteten Unterspann-, Dach- und Dichtungsbahnen, bevorzugt zur Herstellung von bituminierten Unterspann-, Dach- und Dichtungsbahnen, verwenden. Daneben lassen sich die erfindungsgemäßen Träger auch für Flooringanwendungen und im Bereich Filtration einsetzen.

Als Beschichtungsmassen für Fußböden oder Teppichrücken werden Polyethylen oder Polyvinylchlorid , Polyurethane, EPDM oder TPO (Polyolefine) eingesetzt. Daneben wird für beschichtete Unterspann-, Dach- und Dichtungsbahnen insbesondere Bitumen verwendet.

Die Beschichtungsmassen für Fußböden oder Teppichrücken werden mit den üblichen Verfahren auf die - vorstehend beschriebene - Trägerbahn aufgebracht.

Die bituminierten Bahnen enthalten mindestens eine in eine Bitumenmatrix eingebettete - vorstehend beschriebene - Trägerbahn, wobei der Gewichtsanteil des Bitumens am Flächengewicht der bituminierten Dachbahn vorzugsweise 60 bis 97 Gew.% und der des Spinnvlieses 3 bis 40 Gew.-% beträgt.

Die Herstellung der erfindungsgemäß eingesetzten textilen Flächengebilde erfolgt mittel bekannter Methoden und Verfahren. Die Herstellung des erfindungsgemäßen, verfestigten textilen Flächengebildes erfolgt durch folgende Maßnahmen:
A) Bildung eines textilen Flächengebildes und ggf. mechanische Verfestigung des selbigen,
B) Aufbringen des erfindungsgemäßen Bindersystems umfassend:
   I) 10 bis 70 Gew.-% Polymerisate auf Basis von (i) vinylaromatischen Verbindungen, insbesondere Styrol, und (ii) ungesättigten Carbonsäureanhydriden, insbesondere Maleinsäureanhydrid, und/oder ungesättigten Carbonsäureimide, insbesondere Maleinimid, und/oder ethylenisch ungesättigten Dicarbonsäure, insbesondere Itakonsäure, Maleinsäure, Fumarsäure, und
   II) 80 bis 30 Gew.-% Stärke oder,
   III) 80 bis 30 Gew.-% Polyvinylacetat, und
   IV) 0 bis 10 Gew.-% Additive, und
   V) 0 bis 60 Gew.% Füllstoffe,
   wobei die Auftragsmenge des Bindersystems vorzugsweise zwischen 5 und 35 Gew.% Trockenbinder, bezogen auf das Gesamtgewicht des rohen Flächengebildes, beträgt.
C) Trocknen und Verfestigung des Binders
wobei sich die Angaben zu den Gewichtsanteilen auf die Trockenmasse des Bindersystems beziehen, d.h. ohne Wasser.

Auf die bevorzugten Ausführungsformen des erfindungsgemäß eingesetzten Bindersystem und des textilen Flächengebildes wird verwiesen, diese sind gleichermaßen auch für das Verfahren bevorzugt.

Die Bildung des textilen Flächengebildes erfolgt mittels bekannter Maßnahmen.

Die Durchführung der ggf. erfolgenden mechanischen Verfestigung erfolgt ebenfalls mittels bekannter Methoden.

Der Einbau der gegebenenfalls vorhandenen Verstärkung erfolgt während oder nach der Bildung des textilen Flächengebildes bzw. vor oder während dem Auftragen des erfindungsgemäßen Bindersystems. Die Zuführung der Verstärkung und ggf. jede weitere thermische Behandlung im Herstellverfahren erfolgt vorzugsweise unter Spannung, insbesondere unter Längsspannung.

Die Zuführung von gegebenenfalls einzubauenden weiteren textilen Flächengebilden erfolgt vor oder während der Verfestigung des erfindungsgemäßen Bindersystems.

Der Auftrag des Bindersystems in Schritt B) erfolgt ebenfalls mittels bekannter Methoden. Der Binderauftrag beträgt vorzugsweise zwischen 5 und 50 Gew.-% (trocken), insbesondere 10 und 40 Gew.-%, besonders bevorzugt 15 und 30 Gew.-%, jeweils bezogen auf das Gesamtgewicht des textilen Flächengebildes. Die Trocknung bzw. Verfestigung des Binders erfolgt ebenfalls mittels dem Fachmann bekannter Methoden.

Die einzelnen Verfahrens-Maßnahmen sind für sich alleine genommen bekannt, jedoch in der erfindungsgemäßen Kombination bzw. Reihenfolge und dem Einsatz des erfindungsgemäßen Bindersystems patentfähig.

### Messmethoden:

Die spezifische Festigkeit ist ein Maß für den Einfluss des Binders auf die Festigkeit des Vlieses: Fₛ = (BW (I) + BF (q)) / G_{b}.
Der Bruchwiderstand BW (längs, quer) entspricht der Reissfestigkeit, die gem. DIN EN 29 073-3 an 5cm breiten und 30cm langen Proben gemessen wird. Das Bindergewicht G_{b} entspricht dem Binderauftrag in g / m2.
Die Heißfestigkeit ist ein Maß für die Längsfestigkeit des Vlieses bei 200°C. Die Festigkeit wird gemäß DIN EN 29 073-3 bestimmt, wobei die Messung bei 200°C in einem Ofen durchgeführt wird.
Die Luftdurchlässigkeit wird gemessen gemäß DIN EN ISO 9237 in [I/m² x s]

### Beispiele

Es wird ein Glasfaservlies mittels Nasslegeverfahren hergestellt. Dazu werden E-Glasfaser von 10µ Durchmesser und 12mm Länge nach Standardverfahren (Nasslegeverfahren) zu 50g/m2 Vliesen verarbeitet. Nach Absaugung des Wassers erfolgt der Auftrag des erfindungsgemäßen Binders. Der Binderauftrag beträgt jeweils 24% Gew.-% bezogen auf das Gesamtgewicht des Vlieses nach der Endtrocknung.

Die SMA-Komponente des Bindersystems wurde mittels dem Fachmann bekannter Verfahren hergestellt. Dazu wurde 77Gew-% Sartomer 1000P mit 23 Gew.-% TEA (Vernetzer) in ammoniakalischer Lösung umgesetzt (28%-NH4OH Lösung). Für die Stärkekomponente wurde Stakote 6258 verwendet. Das PVAc wurde von Celanese als Mowilith bezogen. Als Füllstoff wurde Kaolin Huber 90 eingesetzt.

| | Komponenten | Spez. Festigkeit [N/g (Binder)] | Festigkeit (I) [N/5cm] | Heißfestigkeit (I) [N/5cm] | Porosität [I/m²s] | Knickfestigkeit [N/5cm] |
|---|---|---|---|---|---|---|
| 1 | SMA: 50% | 38 | 262 | 79 | 2640 | 143 |
| | PVAc: 50% | | | | | |
| 2 | SMA: 25% | 30 | 195 | 190 | 2250 | 155 |
| | Stärke: 75% | | | | | |
| 3 | SMA: 50% | 20 | 117 | 100 | 2780 | 100 |
| | Füllstoff: 50% | | | | | |

## Patentansprüche

1. Verwendung eines Bindersystem umfassend:
a) 10 bis 70 Gew.-% Polymerisate auf Basis von (i) vinylaromatischen Verbindungen, insbesondere Styrol, und (ii) ungesättigten Carbonsäureanhydriden, insbesondere Maleinsäureanhydrid, und/oder ungesättigten Carbonsäureimide, insbesondere Maleinimid, und/oder ethylenisch ungesättigten Dicarbonsäure, insbesondere Itakonsäure, Maleinsäure, Fumarsäure, und
b) 80 bis 30 Gew.-% Stärke oder,
c) 80 bis 30 Gew.% Polyvinylacetat, und
d) 0 bis 10 Gew.-% Additive, und
e) 0 bis 60% Gew.-% Füllstoffe,
wobei sich die Angaben zu den Gewichtsanteilen auf die Trockenmasse des Bindersystems beziehen, d.h. ohne Wasser, zur Verfestigung von textilen Flächengebilden.

2. Verwendung gemäß Anspruch 1, **dadurch gekennzeichnet, dass** die Komponente a) bis zu 30 Gew.-% eines Vernetzers aufweist.

3. Verwendung gemäß Anspruch 1, **dadurch gekennzeichnet, dass** es sich bei Komponente a) um Polymerisate auf Basis von (i) Styrol und Maleinsäureanhydrid und/oder (ii) Styrol und Maleinimid handelt.

4. Verwendung gemäß Anspruch 3, **dadurch gekennzeichnet, dass** das Polymerisat ein Molverhältnis von Styrol zu Maleinsaureanhydrid zwischen 1:4 und 4:1, besonders bevorzugt zwischen 1:1 und 4:1, aufweist.

5. Verwendung gemäß Anspruch 3, **dadurch gekennzeichnet, dass** das Molekulargewicht des Styrol-Maleinsäureanhydrid-Copolymeren zwischen 1600 bis 50000 g/mol, bevorzugt zwischen 5000 und 50000 g/mol, insbesondere bevorzugt zwischen 7000 und 50000 g/mol, liegt.

6. Verwendung gemäß Anspruch 3, **dadurch gekennzeichnet, dass** das Styrol-Maleinsäureanhydrid-Copolymere 2 bis 25 Gew.-%, bevorzugt 5 bis 15 Gew.-%, an Maleinsäureanhydrid-Bestandteilen ausweist.

7. Verwendung gemäß Anspruch 3, **dadurch gekennzeichnet, dass** das Styrol-Maleinsäureanhydrid-Copolymere eine Säurezahl von mindestens 200, besonders bevorzugt von mindestens 270, insbesondere von mindestens 350, aufweist.

8. Verwendung gemäß Anspruch 1, **dadurch gekennzeichnet, dass** es sich bei der Stärke um natürilche oder modifizierte Stärke bzw. Stärkederivate handelt.

9. Verwendung gemäß Anspruch 1, **dadurch gekennzeichnet, dass** es sich bei Komponente c) um Homopolymere des Vinylacetats und/oder Co- bzw. Ter-Polymerisate des Vinylacetats mit Acrylsäure, Acrylaten, Crotonsäure, Vinyllaurat, Vinylchlorid oder auch Ethylen handelt.

10. Verwendung gemäß Anspruch 1, **dadurch gekennzeichnet, dass** es sich bei Komponente c) um ein Polyvinylacetat handelt, dessen Molekulargewicht (Gewichtsmittel) zwischen 10000 und 1500000 g/mol beträgt.

11. Verwendung gemäß Anspruch 1, **dadurch gekennzeichnet, dass** es sich um eine Dispersion handelt und die Viskosität der Dispersion 10 bis 2200 mPa*s beträgt.

12. Textiles Flächengebilde welches mit einem Bindersystem umfassend:
a) 10 bis 70 Gew.-% Polymerisate auf Basis von (I) vinylaromatischen Verbindungen, insbesondere Styrol, und (II) ungesättigten Carbonsäureanhydriden, insbesondere Maleinsäureanhydrid, und/oder ungesättigten Carbonsäureimide, insbesondere Maleinimid, und/oder ethylenisch ungesättigten Dicarbonsäure, insbesondere Itakonsäure, Maleinsäure, Fumarsäure, und
b) 80 bis 30 Gew.-% Stärke oder,
c) 80 bis 30 Gew.-% Polyvinylacetat, und
d) 0 bis 10 Gew.-% Additive, und
e) 0 bis 60% Ges.-% Füllstoffe,
wobei sich die Angaben zu den Gewichtsanteilen auf die Trockenmasse des Bindersystems beziehen, d.h. ohne Wasser,verfestigt worden ist und die Auftragsmenge des Bindersystems vorzugsweise zwischen 5 und 35 Gew.-% Trockenbinder, bezogen auf das Gesamtgewicht des rohen textilen Flächengebildes, beträgt.

13. Textiles Flächengebilde gemäß Anspruch 12, **dadurch gekennzeichnet, dass** es sich bei dem textilen Flächengebilde um ein Gewebe, Gelege, Gestrick, Gewirke und/oder Vlies handelt, vorzugsweise um ein Vlies aus Fasern aus synthetischen Polymeren, insbesondere um ein Spinnvlies, und/oder vorzugsweise um ein Vlies aus Fasern aus Glasfasern und/oder Mineralfasern.

14. Textiles Flächengebilde gemäß Anspruch 12, **dadurch gekennzeichnet, dass** die Komponente a) des Bindersystems bis zu 30 Gew.-% eines Vernetzers aufweist.

15. Textiles Flächengebilde gemäß Anspruch 12, **dadurch gekennzeichnet, dass** die Komponente a) des Bindersystems ein Polymerisat auf Basis von (i) Styrol und Maleinsäureanhydrid und/oder (ii) Styrol und Maleinimid ist.

16. Textiles Flächengebilde gemäß Anspruch 15, **dadurch gekennzeichnet, dass** das Polymerisat im Molverhältnis von Styrol zu Maleinsaureanhydrid zwischen 1:4 und 4:1, besonders bevorzugt zwischen 1:1 und 4:1, vorliegt.

17. Textiles Flächengebilde gemäß Anspruch 15, **dadurch gekennzeichnet, dass** das Molekulargewicht des Styrol-Maleinsäureanhydrid-Copolymeren zwischen 1600 bis 50000 g/mol, bevorzugt zwischen 5000 und 50000 g/mol, insbesondere bevorzugt zwischen 7000 und 50000 g/mol, liegt,

18. Textiles Flächengebilde gemäß Anspruch 15, **dadurch gekennzeichnet, dass** das Styrol-Maleinsäureanhydrid-Copolymere 2 bis 25 Gew.-%, bevorzugt 5 bis 15 Gew.-%, an Maleinsäureanhydrid-Bestandteilen ausweist.

19. Textiles Flächengebilde gemäß Anspruch 15, **dadurch gekennzeichnet, dass** das Styrol-Maleinsäureanhydrid-Copolymere eine Säurezahl von mindestens 200, besonders bevorzugt von mindestens 270, insbesondere von mindestens 350, aufweist.

20. Textiles Flächengebilde gemäß Anspruch 12, **dadurch gekennzeichnet, dass** die Stärke eine natürliche oder modifizierte Stärke bzw. Stärkederivate ist.

21. Textiles Flächengebilde gemäß Anspruch 12, **dadurch gekennzeichnet, dass** das es sich bei Komponente c) um Homopolymere des Vinylacetats und/oder Co- bzw. Ter-Polymerisate des Vinylacetats mit Acrylsäure, Acrylaten, Crotonsäure, Vinyllaurat, Vinylchlorid oder auch Ethylen handelt.

22. Textiles Flächengebilde gemäß Anspruch 12, **dadurch gekennzeichnet, dass** es sich bei Komponente c) um ein Polyvinylacetat handelt, dessen Molekulargewicht (Gewichtsmittel) zwischen 10000 und 1500000 g/mol beträgt.

23. Trägereinlage für Unterspann-, Dach- und Dichtungsbahnen, textile Rücken oder textile Verstärkung in Fußböden, insbesondere in Teppichböden und PVC-Fußböden, umfassend mindestens ein textiles Flächengebilde gemäß Anspruch 12 bis 22.

24. Trägereinlage gemäß Anspruch 23, **dadurch gekennzeichnet, dass** das textiles Flächengebilde ein Gesamtflächengewicht von 20 bis 500 g/m² aufweist und vorzugsweise mindestens eine zusätzliche Verstärkung aufweist.

25. Beschichtete Unterspann-, Dach- und Dichtungsbahn umfassend mindestens eine Beschichtungsmasse und mindestens ein textiles Flächengebilde gemäß Anspruch 12 bis 22 oder eine Trägereinlage gemäß Anspruch 23 bis 24.

26. Fußboden, insbesondere Teppichboden oder PVC-Fußboden, umfassend einen textilen Rücken oder eine textile Verstärkung umfassend mindestens ein textiles Flächengebilde gemäß Anspruch 12 bis 22 oder eine Trägereinlage gemäß Anspruch 23 bis 24.

## Claims

1. Use of a binder system comprising:
a) 10 to 70% by weight of polymerizates based on (i) vinylaromatic compounds, in particular styrene, and (ii) unsaturated carboxylic acid anhydrides, in particular maleic acid anhydride, and/or unsaturated carboxylic acid imides, in particular maleic imide, and/or ethylenically unsaturated dicarboxylic acid, in particular itaconic acid, maleic acid, fumaric acid, and
b) 80 to 30% by weight of starch, or
c) 80 to 30% by weight of polyvinyl acetate, and
d) 0 to 10% by weight of additives, and
e) 0 to 60% by weight of fillers,
with the figures for the percentages by weight relating to the dry mass of the binder system, i.e. without water, for the strengthening of textile fabrics.

2. The use according to Claim 1, **characterized in that** the component a) includes up to 30% by weight of a cross-linking agent.

3. The use according to Claim 1, **characterized in that** the component a) are polymerizates based on (i) styrene and maleic acid anhydride and/or (ii) styrene and maleic imide.

4. The use according to Claim 3, **characterized in that** the polymerizate has a mole ratio of styrene to maleic acid anhydride of between 1:4 and 4:1, particularly preferably between 1:1 and 4:1.

5. The use according to Claim 3, **characterized in that** the molecular weight of the styrene/maleic acid anhydride copolymer is between 1,600 and 50,000 g/mol, preferably between 5,000 and 50,000 g/mol, particularly preferably between 7,000 and 50,000 g/mol.

6. The use according to Claim 3, **characterized in that** the styrene/maleic acid anhydride copolymer accounts for 2 to 25% by weight, preferably 5 to 15% by weight, of maleic acid anhydride constituents.

7. The use according to Claim 3, **characterized in that** the styrene/maleic acid anhydride copolymer has an acid value of at least 200, particularly preferably at least 270, in particular at least 350.

8. The use according to Claim 1, **characterized in that** the starch is a natural or modified starch or starch derivatives.

9. The use according to Claim 1, **characterized in that** the component c) are homopolymers of the vinyl acetate and/or co- or terpolymerizates of the vinyl acetate with acrylic acid, acrylates, crotonic acid, vinyl laurate, vinyl chloride or else ethylene.

10. The use according to Claim 1, **characterized in that** the component b) is a polyvinyl acetate whose molecular weight (weight average) is between 10,000 and 1,500,000 g/mol.

11. The use according to Claim 1, **characterized in that** it is a dispersion and the viscosity of the dispersion is 10 to 2,200 mPa*s.

12. A textile fabric which has been strengthened with a binder system comprising:
a) 10 to 70% by weight of polymerizates based on (i) vinylaromatic compounds, in particular styrene, and (ii) unsaturated carboxylic anhydrides, in particular maleic acid anhydride, and/or unsaturated carboxylic acid imides, in particular maleic imide, and/or ethylenically unsaturated dicarboxylic acid, in particular itaconic acid, maleic acid, fumaric acid, and
b) 80 to 30% by weight of starch, or
c) 80 to 30% by weight of polyvinyl acetate, and
d) 0 to 10% by weight of additives, and
e) 0 to 60% by weight of fillers,
with the figures for the percentages by weight relating to the dry mass of the binder system, i.e. without water, and the applied quantity of the binder system is preferably between 5 and 35% by weight of dry binder, based on the total weight of the raw textile fabric.

13. The textile fabric according to Claim 12, **characterized in that** the textile fabric is a woven fabric, scrim, knotted fabric, knitted fabric and/or non-woven fabric, preferably a non-woven fabric made from fibers of synthetic polymers, in particular a spunbonded non-woven fabric, and/or preferably a non-woven fabric made from fibers of glass fibers and/or mineral fibers.

14. The textile fabric according to Claim 12, **characterized in that** the component a) of the binder system includes up to 30% by weight of a cross-linking agent.

15. The textile fabric according to Claim 12, **characterized in that** the component a) of the binder system is a polymerizate based on (i) styrene and maleic acid anhydride and/or (ii) styrene and maleic imide.

16. The textile fabric according to Claim 15, **characterized in that** the polymerizate is present in a mole ratio of styrene to maleic acid anhydride of between 1:4 and 4:1, particularly preferably between 1:1 and 4:1.

17. The textile fabric according to Claim 15, **characterized in that** the molecular weight of the styrene/maleic acid anhydride copolymer is between 1,600 and 50,000 g/mol, preferably between 5,000 and 50,000 g/mol, particularly preferably between 7,000 and 50,000 g/mol.

18. The textile fabric according to Claim 15, **characterized in that** the styrene/maleic acid anhydride copolymer accounts for 2 to 25% by weight, preferably 5 to 15% by weight, of maleic acid anhydride constituents.

19. The textile fabric according to Claim 15, **characterized in that** the styrene/maleic acid anhydride copolymer has an acid value of at least 200, particularly preferably at least 270, in particular at least 350.

20. The textile fabric according to Claim 12, **characterized in that** the starch is a natural or modified starch or starch derivatives.

21. The textile fabric according to Claim 12, **characterized in that** the component c) are homopolymers of the vinyl acetate and/or co- or terpolymerizates of the vinyl acetate with acrylic acid, acrylates, crotonic acid, vinyl laurate, vinyl chloride or else ethylene.

22. The textile fabric according to Claim 12, **characterized in that** the component c) is a polyvinyl acetate whose molecular weight (weight average) is between 10,000 and 1,500,000 g/mol.

23. A base interlining for sarking membranes, roofing sheets and water-proof sheetings, textile backings or textile reinforcements in floorings, in particular in carpets and PVC floorings, comprising at least one textile fabric according to Claims 12 to 22.

24. The base interlining according to Claim 23, **characterized in that** the textile fabric has a total area weight of 20 to 500 g/m² and preferably has at least one additional reinforcement.

25. A coated sarking membrane, roofing sheet and liner material, comprising at least one coating compound and at least one textile fabric according to Claims 12 to 22 or a base interlining according to Claims 23 to 24.

26. A flooring, in particular a fitted carpet or a PVC flooring, comprising a textile backing or a textile reinforcement comprising at least one textile fabric according to Claims 12 to 22 or a base interlining according to Claims 23 to 24.

## Revendications

1. Utilisation d'un système de liant comprenant :
a) de 10 à 70 % m de polymère sur la base de (1) liants vinylaromatiques, particulièrement du styrol, et (ii) des anhydrides d'acide organique insaturés, particulièrement des anhydrides d'acide maléique, et/ou des imides d'acide organique insaturés, en particulier des imides maléiques, et/ou de l'acide dicarboxylique éthylénique insaturé, particulièrement l'acide itaconique, de l'acide maléique, acide fumarique, et
b) de 80 à 30 % m d'amidon, ou
c) de 80 à 30 % m d'acétate de polyvinyle, et
d) de 0 à 10 % m d'additif, et de 0 à 60 % de matériel de remplissage,
les données concernant les parts massiques étant relatives à la masse sèche du système de liant, c.-à-d. sans eau, pour la consolidation d'étoffes textiles.

2. Utilisation selon la revendication 1, **caractérisée en ce que** la composante a) présente jusqu'à 30 % m d'un agent de réticulation.

3. Utilisation selon la revendication 1, **caractérisée en ce que** la composante a) est un polymère sur la base de (i) styrol et d'anhydride maléique et/ou (ii) styrol d'imide maléique.

4. Utilisation selon la revendication 3, **caractérisée en ce que** le polymère présente un ratio molaire de styrol pour l'anhydride d'acide maléique entre 1 : 4 et 4 : 1 et, de préférence, entre 1:1 et 4:1.

5. Utilisation selon la revendication 3, **caractérisée en ce que** le poids moléculaire du copolymère de styrol et d'anhydride d'acide maléique se situe entre 1600 et 50 000 g/mol, préférablement entre 5000 et 50 000 g/mol, et favorisé plus particulièrement entre 7000 et 50 000 g/mol.

6. Solution selon la revendication 3, **caractérisée en ce que** le copolymère de styrol et d'anhydride d'acide maléique est composé de 2 à 25 % m, préférablement entre 5 et 15 % m, d'anhydride d'acide maléique.

7. Utilisation selon la revendication 3, **caractérisée en ce que** le copolymère de styrol et d'anhydride d'acide maléique possède un indice d'acidité d'au moins 200, préférablement d'au moins 270, plus particulièrement d'au moins 350.

8. Utilisation selon la revendication 1, **caractérisé en ce que** l'amidon est un amidon ou un dérivé d'amidon naturel ou modifié.

9. Utilisation selon la revendication 1, **caractérisée en ce que** la composante c) est un homopolymère de l'acétate vinylique et/ou de co- ou terpolymère d'acétate vinylique avec acide acrylique, acrylates, acide crotonique, laurate vinylique, chloride vinylique ou encore de l'éthylène.

10. Utilisation selon la revendication 1, **caractérisée en ce que** la composante c) est un acétate polyvinylique dont le poids moléculaire (moyenne de poids) se situe entre 10 000 et 1 500 000 g/mol.

11. Utilisation selon la revendication 1, **caractérisée en ce qu'**il s'agit d'une dispersion et que la viscosité de la dispersion se situe entre 10 à 2200 mPa.

12. Étoffe de textile, lequel a été, avec un système de liant comprenant :
a) de 10 à 70 % m de polymère sur la base de (1) liants vinylaromatiques, particulièrement du styrol, et (ii) des anhydrides d'acide organique insaturés, particulièrement des anhydrides d'acide maléique, et/ou des imides d'acide organique insaturés, en particulier des imides maléiques, et/ou de l'acide dicarboxylique éthylénique insaturé, particulièrement l'acide itaconique, de l'acide maléique, acide fumarique, et
b) de 80 à 30 % m d'amidon, ou
c) de 80 à 30 % m d'acétate de polyvinyle, et
d) de 0 à 10 % m d'additif, et de 0 à 60 % de matériel de remplissage,
les données concernant les parts massiques étant relatives à la masse sèche du système de liant, c.-à-d. sans eau, consolidé et la quantité commandée du système de liant est composée de préférence de 5 à 35 % m de liant sec, relativement au poids total de l'étoffe textile brute.

13. Étoffe de textile selon la revendication 12, **caractérisée en ce que** l'étoffe de textile est un tissu, grille, une étoffe de bonneterie, du tissu de maille et/ou un non-tissé, préférablement un non-tissé composé de fibre de polymère synthétique, plus particulièrement un tissu filé-lié et/ou préférablement un tissé composé de fibre de verre ou de fibre minérale.

14. Étoffe de textile selon la revendication 12, **caractérisée en ce que** la composante a) présente jusqu'à 30 % m d'un agent de réticulation.

15. Étoffe de textile selon la revendication 12, **caractérisée en ce que** la composante a) est un polymère sur la base de (i) styrol et d'anhydride maléique et/ou (ii) styrol d'imide maléique.

16. Étoffe de textile selon la revendication 15, **caractérisée en ce que** le polymère présente un ratio molaire de styrol pour l'anhydride d'acide maléique entre 1 : 4 et 4 : 1 et, de préférence, entre 1 : 1 et 4 : 1.

17. Étoffe de textile selon la revendication 15, **caractérisée en ce que** le poids moléculaire du copolymère de styrol et d'anhydride d'acide maléique se situe entre 1600 et 50 000 g/mol, préférablement entre 5000 et 50 000 g/mol, et favorisé plus particulièrement entre 7000 et 50 000 g/mol.

18. Étoffe de textile selon la revendication 15, **caractérisée en ce que** le copolymère de styrol et d'anhydride d'acide maléique est composé de 2 à 25 % m, préférablement entre 5 et 15 % m, d'anhydride d'acide maléique.

19. Étoffe de textile selon la revendication 15, **caractérisée en ce que** le copolymère de styrol et d'anhydride d'acide maléique possède un indice d'acidité d'au moins 200, préférablement d'au moins 270, plus particulièrement d'au moins 350.

20. Étoffe de textile selon la revendication 12, **caractérisé en ce que** l'amidon est un amidon ou un dérivé d'amidon naturel ou modifié.

21. Étoffe de textile selon la revendication 12, **caractérisée en ce que** la composante c) est un homopolymère de l'acétate vinylique et/ou de co- ou terpolymère d'acétate vinylique avec acide acrylique, acrylates, acide crotonique, laurate vinylique, chloride vinylique ou encore de l'éthylène.

22. Étoffe de textile selon la revendication 12, **caractérisée en ce que** la composante c) est un acétate polyvinylique dont le poids moléculaire (moyenne de poids) se situe entre 10 000 et 1 500 000 g/mol.

23. Étoffe de textile selon la revendication pour les écrans de sous-toiture, de toiture et d'étanchéité, les dossiers de textile ou les supports dans les planchers, en particulier les planchers de tapis ou de PVC, comprenant au moins une étoffe de textile selon les revendications 12 à 22.

24. Support selon la revendication 23, **caractérisé en ce que** l'étoffe de textile présente un grammage de 20 à 500 g/m² et, préférablement, au moins un support supplémentaire.

25. Écran recouvert de sous-toiture, de toiture et d'étanchéité, comprenant au moins un composé de revêtement et une étoffe de textile selon les revendications 12 à 22 ou un support selon les revendications 23 à 24.

26. Plancher, en particulier un plancher de pis ou de PVC, comprenant un dossier de textile ou un support de textile comprenant au moins une étoffe de textile selon les revendications 12 à 22 ou un support selon les revendications 23 à 24.
